# EUROPEAN PATENT SPECIFICATION

(11) **EP 2 436 563 B1**
(45) Date of publication and mention of the grant of the patent: **11.05.2016**
(21) Application number: 10013263.8
(22) Date of filing: 04.10.2010
(51) Int. Cl.: B60R 21/00, E05B 77/02, E05B 83/30, B60R 21/055, B60R 7/06

(54) **A glove box for vehicles**
Handschuhfach für Fahrzeuge
Boîte à gants pour véhicules

(43) Date of publication of application: 04.04.2012
(73) Proprietor: Tofas Turk Otomobil Fabrikasi Anonim Sirketi, 16369 Bursa (TR)
(72) Inventor: Hasan, Ayarturk, 16369 Bursa (TR)
(74) Representative: Dericioglu, E. Korhan

(56) References cited:
- JP-A- 2004 262 334
- JP-A- 2008 082 132

## Description

### Field of the Invention

The present invention relates to a glove box which prevents knees of people, who are sitting in front of the vehicle, from being injured in possible accidents to occur in vehicles.

### Background of the Invention

As a result of frontal impacts, which the vehicles are subjected to, knees of people who are sitting in front of the vehicle may hit the glove boxes of the vehicle. The said impact intensity increases depending on the crash intensity of the vehicle and the increase of intensity may cause the knees hitting the glove box to be injured substantially.

Nowadays different safety measures are taken in order to prevent injuries that can occur in people's knees in consequence of people who are especially sitting in front of the vehicle hitting their knees to the glove box as a result of the crash of the vehicles. Different methods such as a glove box design which can be deformed, using shock absorber additional parts made of metal or rubber material, using airbag in a glove box, are used in currently used systems. In some of the currently used systems, the movable parts of the glove box are produced as two parts and welded, and deformable parts are placed between the contacting surfaces of the said two parts.

Designing the glove boxes such that they can be deformed against shock to absorb the force resulting during the crash, may cause the said glove boxes to be deformed during production as well. The use of additional shock absorbing materials or airbag in glove boxes increases the production costs. Producing the movable part in currently used glove boxes from two parts and the said two parts are composed of sliding structure which can fit into each other, increase the production cost. Also the necessity to leave a a space behind the glove box in the said structure decreases the usable glove box capacity.

In Japanese Patent document no JP6087391, an application in the state of the art, it is aimed to realize a knee protecting system during an accident by arranging an energy absorbing unit in places where the glove boxes in the vehicles are present. The unit absorbing the impact energy is formed in combination with the glove box. When the glove box is open, the unit absorbing the impact energy moves circularly with the glove box as being separate from the support point.

Japan Patent document no JP6234343, an application in the state of the art, discloses a glove box having a knee protection function via impact absorber. The impact absorber is in U shape and situated between two fixed support units. The impact absorber expands and narrows by rotating around the support unit at the back. The cover part of the glove box decreases the force applied by the knees by moving inwards during impact by transferring the force to the impact absorber.

Also the patent documents nos. DE10055051, JP7329662, JP7112650, JP2001138817, KR20020044005, DE102004005494, DE102004016187, KR20050017467, US6302437, DE102005027379, US2008106110, JP2001088640, US2007182145, DE19924243791, applications in the state of the art, disclose glove boxes in different structures formed in order to prevent the knee from being injured during crash. The said documents disclose glove boxes which are produced from deformable material, have a shock absorber, on which there is airbag, the movable part of which is produced as two parts and welded and deformable parts are placed between the contacting surfaces of the said two parts. A glove box according to the preamble of claim 1 is known from document JP 2008 082 132 A.

### Summary of the Invention

The objective of this invention relates to a glove box which prevents the person in the vehicle from being subjected to an impact that can injure his/her knee during crash of the vehicles.

A further objective of this invention relates to the glove box whose production cost is low.

### Detailed Description of the Invention

A glove box for vehicles realized to fulfill the objectives of the present invention is illustrated in the accompanying figures, in which,
Figure 1 is the perspective view of the inventive glove box's cover in open position.
Figure 2- is the perspective view of the glove box's cover in closed position.
Figure 3- is the perspective view of the glove box mounted on the vehicle body.
Figure 4- is the perspective view of the inner part of the glove box.
Figure 5- is the perspective view of the cover, pocket, lock, shaft and connection member.
Figure 6- is the perspective view of the body and the hole in the glove box.
Figure 7- is the perspective view of the glove box before hitting of the knee.
Figure 8- is the perspective view of the glove box after hitting of the knee.
Figure 9- is the perspective view of the pocket, cavity and latch in the glove box.
Figure 10- is the side sectional view of one embodiment of the glove box before hitting of the knee.
Figure 11 - is the side sectional view of one embodiment of the glove box after hitting of the knee.
Figure 12- is the perspective view of the connection member in the glove box in attached position to the shaft.
Figure 13- is another perspective view of the connection member in the glove box attached position to the shaft.

The components in the figures are numbered where the numbers refer to the following:
1- Glove box
2- Body
3- Hole
4- Cover
5- pocket
6- Cavity
7- Latch
8- Lock
9- Shaft
10- Connection member
11- Extension
12- Step
A: Vehicle cockpit

A glove box (1) which prevents knees of people sitting in front of the vehicle from being injured in possible accidents to occur in vehicles is defined according to claim 1.

Stuffs are placed into the cavity which is inside the body (2).

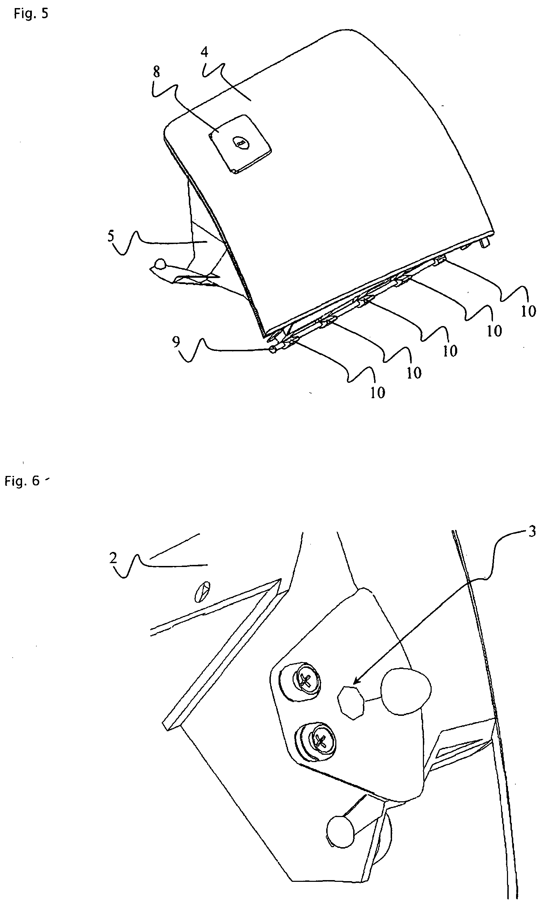

There are two holes (3) as being one each on two corresponding side walls of the body (2) in the preferred embodiment of the invention. The said holes (3) are preferably round in order to make rotary motion in the latch (7) (Figure 6).

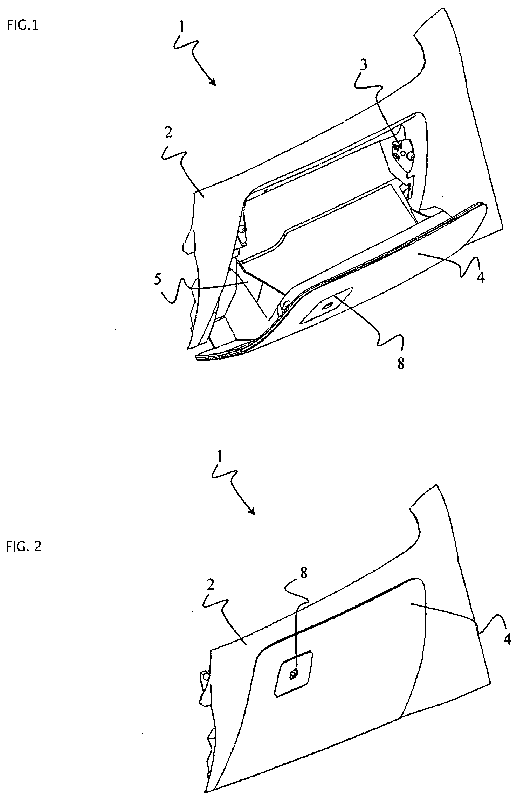

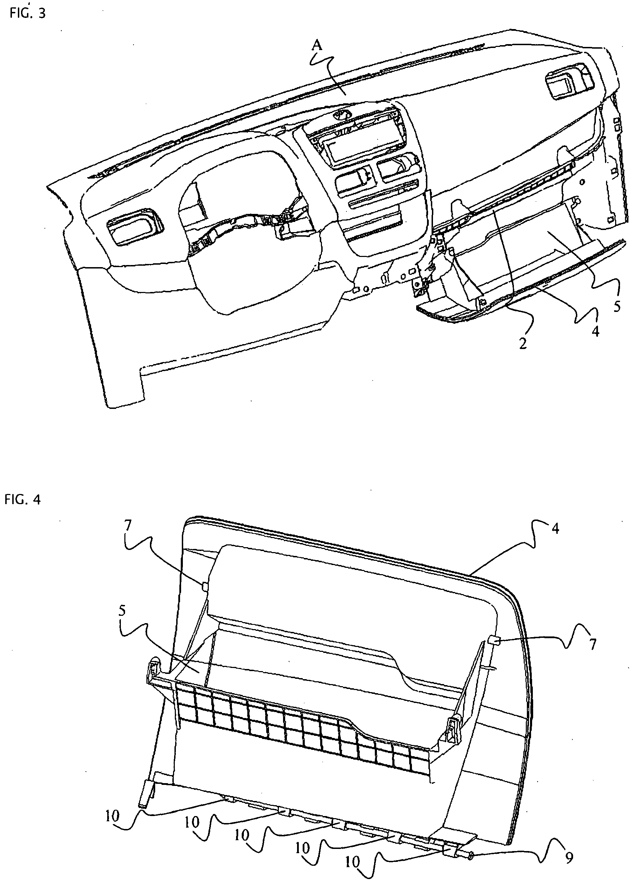

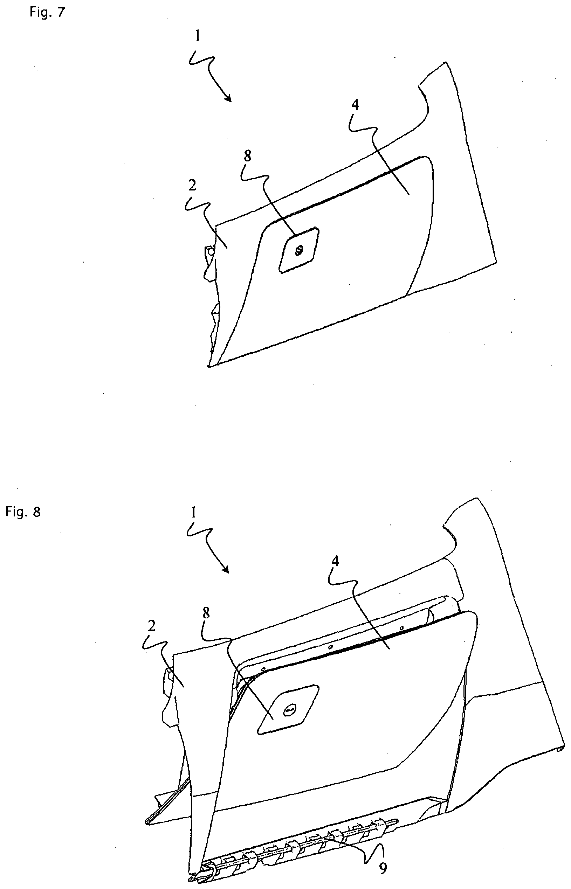

The cover (4) enables the glove box (1) to make up a closed form (Figure 7). When the people in the vehicle want to place a stuff inside the body (2) or take a stuff from the body (2), they enable the latch (7) to be detached from the hole (3) and the cover (4) to be opened by pulling the lock (8) towards themselves (Figure 1 and 3). When the cover (4) is wanted to be closed again, the people in the vehicle close the cover (4) by pushing the cover (4) towards the body (2) independently from the lock (8) (Figure 2). In the said process, the latch (7) extending outwards by the pocket (5) ,fits into the cavity (6) by means of its spring structure (not shown in the figures) when it contacts to the edge of the body (2) and then the latch (7) corresponding to the hole (3) fits in to the hole (3) when the cover (4) is closed. So the cover (4) is prevented from being opened independently of the lock (8).

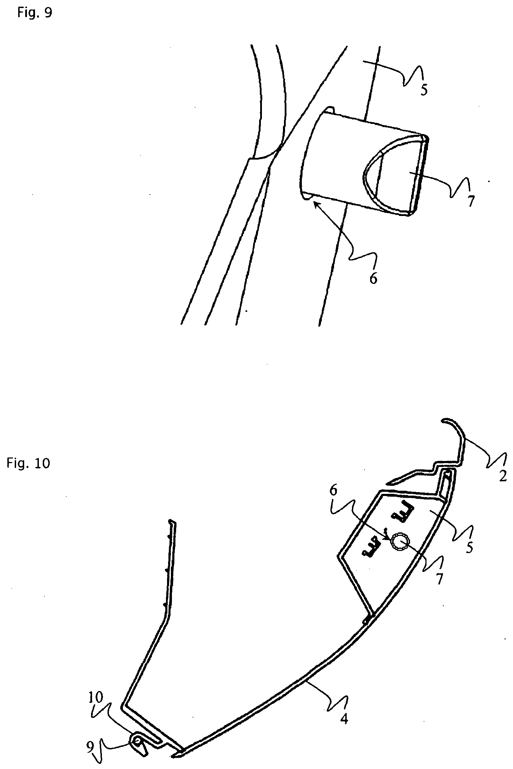

The pocket (5) is both used as a separate glove box except the body (2) and enables the cover (4) to be attached to the body (2) in closed position (Figure 4 and Figure 10).

The latch (7), in the preferred embodiment of the invention, is in a cylindrical shape one side of which is cut angularly (Figure 9). The said surface having an angularly cut is the surface contacting the body (2) during closing of the cover (4) and enables the latch (7) to fit into the cavity (6) in the closing process of the cover (4) when a force is applied on the cover (4). The latch (7) can rotate around its axis in the hole (3) by means of its cylindrical structure.

The shaft (9), in the preferred embodiment of the invention, is in a cylindrical shape and enables the cover (4) to make rotary motion as it will be the shaft (9) rotation axis.

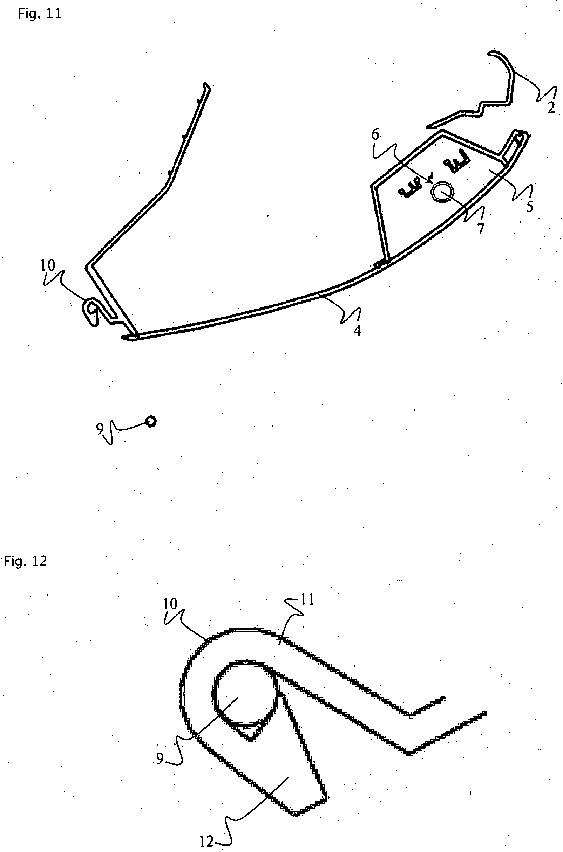

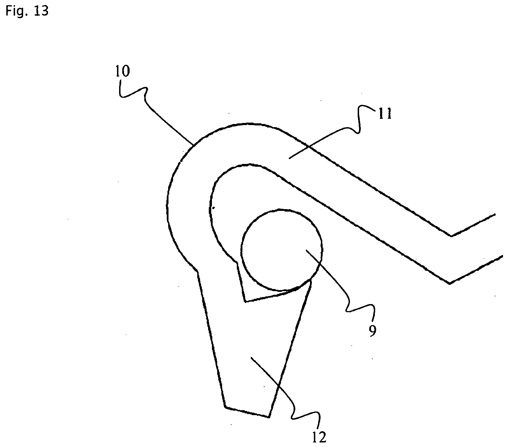

The connection member (10), in the invention, comprises
- at least one extension (11) extending from the lower surface of the cover (4) and gripping the shaft (9), and
- at least one step (12) situated on the end of the extension (11) which does not contact the cover (4) and preventing the cover (4) from detaching from the shaft (9) unless a force is applied from the lower surface of the cover (4) (Figure 12 and Figure 13).

The extension (11), of the invention, has a hook-shaped structure which has a unciform end and thus enables the connection member (10) to make rotary motion around the shaft (9) by gripping the shaft (9) The extension (11) and the step (12) which is at the end of the extension (11) have an elastic structure (Figure 13). In case of an accident, if the cover (4) is in closed position, the extension (11) and the step (12) enable the connection member (10) to get free from the shaft (10) by stretching after knee of the person in the vehicle applies a force on the cover (4) by hitting the lower edge of the cover (4) (Figure 8 and Figure 11). Meantime, the latch (7) enables the lower edge of the cover (4) to move towards cavity of the hollow body (2) by rotating around its axis inside the hole (3). By means of the movement of the cover (4) towards cavity of the body (2) it is provided that the person's knee reaches the cavity of the body (2). If the cover (4) is in open position during accident after knee of the person in the vehicle applies a force on the cover (4) by hitting the lower edge of the cover (4), the connection member (10) detaches from the shaft (9) and the cover (4) completely comes loose. By this means in case of any accident any possible injury on the knee of the person in the vehicle is prevented.
The cover (4) has a "U" shaped structure such that stuff can be put therein in one embodiment of the invention. In the said embodiment the people in the vehicle put their stuff inside the pocket (5) and the cover (4) instead of the body (2).

## Claims

1. A glove box (1) which prevents knees of people sitting in front of the vehicle from being injured in possible accidents to occur in vehicles comprising:
- at least one body (2) which is fixed to the vehicle cockpit (A), one surface of which is open and has a hollow structure,
- at least one hole (3) which is situated on the side wall of the body (2) and enables connection,
- at least one cover (4), one side of which is mounted on the lower part of open surface of the body (2) and enables the open surface of the body (2) to be opened and closed by moving on the part where it is mounted,
- at least one pocket (5) which is situated on the surface of the cover (4) facing the body (2) and extends along the cover (4) surface almost up to the hole (3) on the edge of the body (2), and **characterized by**
- at least one cavity (6) which is situated on at least one edge of the pocket (5) and corresponds exactly to the hole (3) when the cover (4) is completely closed,
- at least one latch (7) which is placed coaxially to the cavity (6), extends outwards from the pocket (5), enables the pocket (5) and thus the cover (4) to be attached to the body (2) by fitting into the hole (3) coaxially with the hole (3) upon the cover (4) is closed,
- at least one lock (8) which is situated on the surface of the cover (4) not facing the body (2) and enables the cover (4) to open by enabling the latch (7) to detach from the hole (3),
- at least one shaft (9) which is situated on the body (2), on the part wherein the cover (4) is mounted to the body (2), and
- at least one connection member (10) which is situated on the edge wherein the cover (4) is mounted to the body (2), enabling cover (4) to move rotationally around the shaft (9) by being fixed to the shaft (9),and has at least one extension (11) extending from the lower surface of the cover (4) and gripping the shaft (9), and at least one step (12) located at the end of the extension (11) that does not contact the cover (4) and preventing the cover (4) from dislocating from the shaft (9) unless a force is applied from the lower surface of the cover (4),
- said extension (11) having a hooked-shaped structure which has a unciform end and thus enables the connection member (10) to make rotary motion around the shaft (9) by gripping the shaft (9)
**characterized in that**
- said, extension (11) has an elastic structure and thus enables the connection member (10) to detach from the shaft (9) after a force is applied to the lower end of the cover (9) during a crash, the cover is enabled to detach from the shaft (9) upon the impact acting on the cover (4) and thus enabled to reduce the effect of the crash on the knees of people.

2. A glove box (1) according to claim 1, **characterized by** a hole (3) which is round in order that latch (7) can make rotary motion.

3. A glove box (1) according to any of the Claims 1 or 2, **characterized by** a latch (7) having a spring structure enabling to fit into the cavity (6) when it contacts the edge of the body (2) in closing process of the cover and to enter into the hole (3) when the cover (4) is closed.

4. A glove box (1) according to any of the preceding claims, **characterized by** a latch (7) which has a cylindrical shape one side of which is cut in angularly.

5. A glove box (1) according to any of the preceding claims, **characterized by** a shaft (9) which has a cylindrical shape and enables the cover (4) to make rotary motion such that the rotation axis is the shaft (9).

6. A glove box (1) according to any of the preceding claims, **characterized by** a step (12) which has an elastic structure and thus enables the connection member (10) to detach from the shaft (9) after a force is applied to the lower end of the cover (4).

7. A glove box (1) according to any of the preceding claims **characterized by** a cover (4) having a "U" shape structure such that stuff can be put therein.

## Patentansprüche

1. Ein Handschuhfach (1), welches eine Verletzung der Knien eines auf der Vorderseite des Fahrzeuges sitzenden Insassen bei einem eventuell entstehenden Unfall im Fahrzeug verhindert, umfassend;
- mindestens einen Körper (2), welches an den Führerraum (A) befestigt und dessen eine Oberfläche offen ist und eine hohle Struktur aufweist,
- mindestens eine Bohrung (3), welche auf der Seitenwand des Körpers (2) angeordnet ist und die Verbindung ermöglicht,
- mindestens einen Deckel (4), dessen eine Seite an das unteren Teil der offenen Oberfläche des Körpers (2) angebaut ist und es ermöglicht, dass die offene Oberfläche des Körpers (2) geöffnet und durch Bewegen auf dem Teil, wo er angebaut ist, geschlossen wird,
- mindestens eine Tasche (5), welche auf der dem Körper (2) zugewandten Oberfläche des Deckels (4) angeordnet ist und sich entlang der Oberfläche des Deckels (4) annähernd bis zur Bohrung (3) an der Kante des Körpers (2) erstreckt und **gekennzeichnet durch**
- mindestens eine Vertiefung (6), welche an mindestens einer Kante der Tasche (5) angeordnet ist und genau der Bohrung (3) entspricht, wenn der Deckel (4) vollständig geschlossen ist,
- mindestens eine Klinke (7), welche koaxial mit der Vertiefung (6) angeordnet ist, sich aus der Tasche (5) nach außen erstreckt und ermöglicht, dass die Tasche (5) und somit der Deckel (4) **durch** Anbringung in die Bohrung (3), koaxial mit dieser Bohrung (3) an den Körper befestigt sind, bevor der Deckel (4) geschlossen ist,
- mindestens einen Verschluss (8), welcher auf der dem Körper (2) nicht zugewandten Oberfläche des Deckels (4) angeordnet ist und es ermöglicht, dass der Deckel (4) **dadurch** geöffnet wird, dass die Klinke (7) von der Bohrung (3) abgelöst ist,
- mindestens eine Welle (9), welche an demjenigen Bereich des Körpers angeordnet ist, wo der Deckel (4) an den Körper (2) angebaut ist, und
- mindestens ein Verbindungselement (10), welche auf derjenigen Kante angeordnet ist, wo der Deckel (4) an den Körper (2) angebaut ist, ermöglicht, dass der Deckel (4) **durch** Befestigung zur Welle (9) um die Welle (9) sich drehend bewegt und weist eine Verlängerung (11) auf, die sich von der unteren Fläche des Deckels (4) erstreckt und die Welle (9) greift und mindestens eine Stufe (12), die am Ende der Verlängerung (11) angeordnet ist, die den Deckel (4) nicht berührt und verhindert, dass der Deckel (4) von der Welle (9) versetzt wird, außer wenn von der unteren Fläche des Deckels (4) eine Kraft ausgeübt ist,
wobei die erwähnte Verlängerung (11) eine hakenförmige Struktur aufweist, welche ein hakenförmiges Endteil hat und somit ermöglicht, dass das Verbindungselement (10) um die Welle (9) herum eine Drehbewegung verwirklicht, indem es die Welle (9) greift,
**dadurch gekennzeichnet, dass**
- die erwähnte Verlängerung (11) eine elastische Struktur hat und somit ermöglicht, dass das Verbindungselement (10) von der Welle (9) abgelöst wird, nachdem eine Kraft auf das untere Ende des Deckels (9) ausgeübt wurde, während eines Unfalls es ermöglicht wird, dass der Deckel von der Welle (9) auf den Aufprall abgelöst wird, der auf den Deckel (4) einwirkt und auf diese Weise aktiviert ist die Auswirkung des Unfalls auf die Knien des Insassenzu reduzieren.

2. Ein Handschuhfach (1) gemäß Anspruch 1, **gekennzeichnet durch** eine Bohrung (3), welche rund ist, damit die Klinke (7) eine Drehbewegung ausführen kann.

3. Ein Handschuhfach (1) gemäß einem der Ansprüche 1 oder 2, **gekennzeichnet durch** eine Klinke (7) aufweisend eine Federstruktur, welche die Passung in die Vertiefung (6) ermöglicht, wenn sie während des Schliessvorgangs des Deckels die Kante des Körpers (2) berührt und die Eindringung in die Bohrung (3) ermöglicht, wenn der Deckel (4) geschlossen ist.

4. Ein Handschuhfach (1) gemäß einem der vorangehenden Ansprüche, **gekennzeichnet durch** eine Klinke (7), welche eine zylindrische Form aufweist, deren eine Seite winkelig (eckig) geschnitten ist.

5. Ein Handschuhfach (1) gemäß einem der vorangehenden Ansprüche, **gekennzeichnet durch** eine Welle (9), die eine zylindrische Form aufweist und ermöglicht, dass der Deckel (4) eine Drehbewegung macht, so daß die Drehachse die Welle ist (9).

6. Ein Handschuhfach (1) gemäß einem der vorangehenden Ansprüche, **gekennzeichnet durch** eine Stufe (12), welche eine elastische Struktur aufweist und somit es ermöglicht, dass das Verbindungselement (10) von der Welle (9) abgelöst wird, nachdem eine Kraft auf das untere Ende des Deckels (4) ausgeübt wurde.

7. Ein Handschuhfach (1) gemäß einem der vorangehenden Ansprüche, **gekennzeichnet durch** einen Deckel (4) aufweisend eine "U" förmige Struktur, so dass sie mit Material gefüllt werden kann.

## Revendications

1. Une boîte à gants (1) empêchant les genoux des hommes asseyant devant un véhicule d'être blessés dans les accidents possibles qui auront lieu dans les véhicules, comportant:
- au moins une carrosserie (2) fixée à la cabine de véhicule (A), dont une surface est ouverte et possède une structure creuse,
- au moins un trou (3) situé sur la paroi latérale (2) de la carrosserie (2) et permettant à la connexion,
- au moins un capot (4) dont un côté est monté sur la partie inférieure de la surface ouverte de la carrosserie (2) et permet à la surface ouverte de la carrosserie (2) d'être ouverte et fermé en se déplaçant sur la partie à laquelle il est monté,
- au moins une poche (2) située sur la surface du capot (4) faisant face à la carrosserie (2) et s'étendant le long de la surface du capot (4) presque jusqu'au trou (3) sur le bord de la carrosserie (2), et **caractérisée par**
- au moins une cavité (6) située sur au moins un bord de la poche (5) et correspondant exactement au trou (3) quand le capot (4) est complètement fermé,
- au moins un pêne (7) placé coaxialement à la cavité (6), s'étendant vers l'extérieure de la poche (5), permettant à la poche (5) et donc le capot (4) d'être attaché à la carrosserie (2) en logeant dans le trou (3) coaxialement avec le trou (3) sur la fermeture du capot (4),
- au moins un verrou (8) situé sur la surface du capot (4) qui ne fait pas face à la carrosserie (2) mais permet au capot (4) d'être ouvert en permettant au détachement du pêne (7) du trou (3),
- au moins un arbre (9) situé sur la carrosserie (2), sur la part dans laquelle est monté le capot (4) sur la carrosserie (2), et
- au moins un membre de connexion (10) situé sur le bord dans lequel le capot (4) est monté au corps (2), permettant au capot (4) de se déplacer par rotation autour de l'arbre (9) en étant fixé à l'arbre (9), et possédant au moins une extension (11) s'étendant de la surface inférieure du capot (4) et saisissant l'arbre (9), et au moins un pas (12) placé à l'extrémité de l'extension (11) qui ne touche pas au capot (4) et empêche le capot (4) d'être déplacé de l'arbre (9), à moins qu'une force ne soit appliquée de la surface inférieure du capot (4),
- ladite extension (11) possédant une structure en forme de crochet qui a une extrémité uniforme et donc permet au membre de connexion (10) de faire un mouvement rotatif autour de l'arbre (9) en saisissant l'arbre (9),
**Caractérisé en ce que**
- ladite extension (11) possède une structure élastique et donc permet au membre de connexion (10) de se détacher de l'arbre (9) après qu'une force est appliqué à l'extrémité inférieure du capot (9) pendant une collision, le capot est autorisé à se détacher de l'arbre (9) sur l'impact agissant sur le capot (4) et donc autorisé à réduire l'effet de la collision sur le genoux des hommes.

2. Une boîte à gants (1) selon la revendication 1, **caractérisée par** un trou (3) arrondi afin que le pêne (7) puisse faire un mouvement rotatif.

3. Une boîte à gants (1) selon l'une des revendications 1 ou 2, **caractérisée par** un pêne (7) ayant une structure à ressorts permettant à se loger dans la cavité (6) quand elle touche au bord du capot (2) dans le processus de fermeture du capot et à entrer dans le trou (3) quand le capot (4) est fermé.

4. Une boîte à gants (1) selon l'une quelconque des revendications précédentes, **caractérisée par** un pêne (7) ayant une forme cylindrique dont un côté est découpé angulairement.

5. Une boîte à gants (1) selon l'une quelconque des revendications précédentes, **caractérisée par** un arbre (9) ayant une forme cylindrique et permettant au capot (4) de faire un mouvement rotatif dans une façon que l'axe de rotation soit l'arbre (9).

6. Une boîte à gants (1) selon l'une quelconque des revendications précédentes, **caractérisée par** un pas (12) ayant une structure élastique et donc permettant au membre de connexion (10) de se détacher de l'arbre (9) après qu'une force est appliquée à l'extrémité inférieure du capot (4).

7. Une boîte à gants (1) selon l'une quelconque des revendications précédentes, **caractérisée par** un capot (4) ayant une structure en forme "U" dans une façon qu'on peut placer les choses là-dedans.
